**Europäisches Patentamt**

**European Patent Office**

**Office européen des brevets**

(19)

(11) Publication number: **0 067 570**

**A2**

(12) **EUROPEAN PATENT APPLICATION**

(21) Application number: **82302696.8**

(22) Date of filing: **26.05.82**

(51) Int. Cl.³: **B 60 K 15/02**

(30) Priority: **01.06.81 JP 79041/81**

(43) Date of publication of application:
**22.12.82 Bulletin 82/51**

(84) Designated Contracting States:
**DE FR GB IT**

(71) Applicant: **NISSAN MOTOR COMPANY, LIMITED
No.2, Takara-cho, Kanagawa-ku
Yokohama-shi Kanagawa-ken 221(JP)**

(72) Inventor: **Hayashi, Toshio c/o Nissan Motor Company,
Limited
Tsurumi Plant 6-1 Daikoku-cho
Tsurumi-ku Yokohama-shi Kanagawa-ken(JP)**

(72) Inventor: **Moriya, Makoto c/o Nissan Motor Company,
Limited
Tsurumi Plant 6-1 Daikoku-cho
Tsurumi-ku Yokohama-shi Kanagawa-ken(JP)**

(74) Representative: **Freed, Arthur Woolf et al,
MARKS & CLERK 57-60 Lincoln's Inn Fields
London WC2A 3LS(GB)**

(54) Mounting device for conduits connected to a fuel tank of a vehicle.

(57) A mounting device (22) for a conduit (12, 14, 16) connected to a vehicle fuel tank (10) includes a fixed holding member (24) provided with a groove (32). The holding member (24) is resiliently deformable so that the width of the groove (32) can be increased. The original width of the groove (32) is smaller than that of the conduit. The conduit is forcedly pressed into the groove so as to be firmly held by the holding member.

*FIG.1*

*FIG.4*

EP 0 067 570 A2

- 1 -

## MOUNTING DEVICE FOR CONDUITS CONNECTED
## TO A FUEL TANK OF A VEHICLE

This invention relates to a mounting device for conduits connected to a fuel tank of a vehicle, and more particularly to a device which mounts the conduits onto the fuel tank.

Several lines, such as fuel-supply, fuel-retunr, and evaporation emission-control conduits, are connected to the fuel tank of an automotive vehicle. Metal straps are conventionally employed to mount such conduits onto the outer surface of the walls of the fuel tank. After being welded onto the walls of the fuel tank, the straps are wrapped around the conduits to hold them with insulators interposed between the walls of the fuel tank and the straps.

However, such a conventional mounting device necessitates a welding step, resulting in troublesome assembly of the fuel tank and the conduits. What is worse, the mounting device is unsatisfactory from the standpoint of security of mounting since it is apt to become loose.

Accordingly, it is an object of the present invention to provide a mounting device for conduits connected to a fuel tank of a vehicle which simplifies the assembly of the fuel tank and the conduits.

Another object of the present invention is to provide a mounting device for conduits connected to a fuel tank of a vehicle with improved mounting security.

In accordance with the present invention, a mounting device for a conduit connected to a vehicle fuel tank includes a fixed holding member provided with a groove. The holding member is resiliently deformable so that the width of the groove can be increased. The original width of the groove is smaller than that of the conduit. The conduit is forcedly positioned in the groove so as to be firmly held by the holding member.

The above and other objects, features and advantages of the present invention will be apparent from the following description of preferred embodiments thereof, taken in conjunction with the drawings.

Figure 1 is a perspective view of a fuel tank and conduits which are mounted on the fuel tank by means of a mounting device according to a first embodiment of the present invention;

Figure 2 is a side elevational view of the fuel tank and the conduit including the mounting device of Figure 1, with certain portions omitted for the sake of clarity;

Figure 3 is a side elevational view of the mounting device of Figures 1 and 2,

Figure 4 is a cross-sectionaly view taken along the line A-A of Figure 3; and

Figure 5 is a side elevational view of a fuel tank and a conduit which is mounted on the fuel tank by means of a mounting device according to a second embodiment of the present invention.

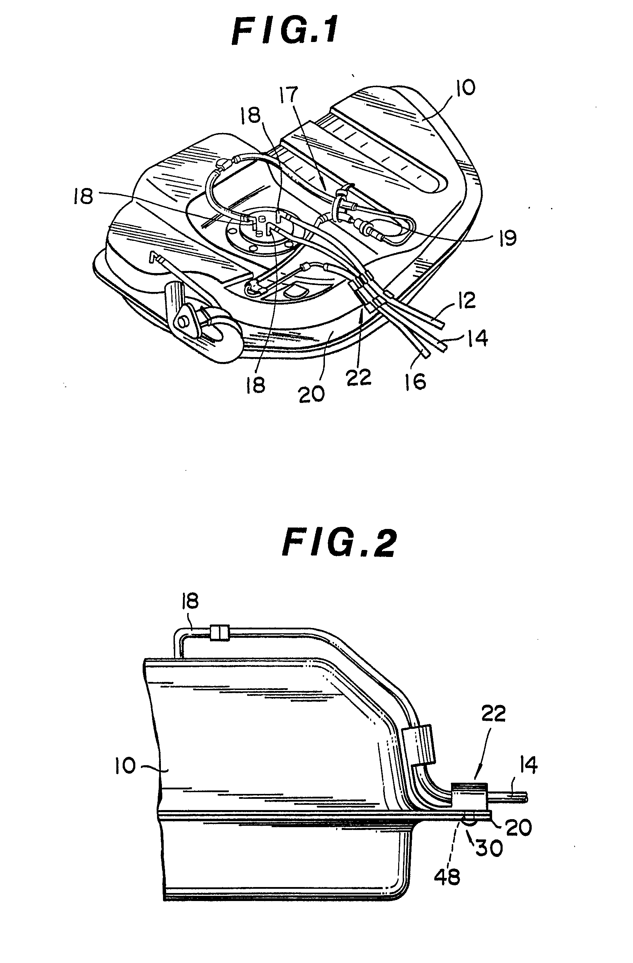

With reference to Figures 1 and 2, there is shown a fuel tank 10 of an automotive vehicle. The interior of the tank 10 communicates with fuel-supply, fuel-return, and evaporation emission-control lines which include conduits 12, 14, and 16, respectively, of circular cross-section. One end of the fuel-supply conduit 12 and that of the fuel-return conduit 14 are directing connected to ends of connecting tubes 18, respectively. One end of evaporation emission-control conduit 16 is connected to an end of another connecting tube 18 by way of a tubing unit 17 including a fuel check valve 19. Each mounting tube 18 extends through the top wall of the fuel tank 10 and opens, at the other end, into the interior of the tank 10. The connecting tubes 18 are sealingly welded to the top wall of fuel tank 10 at a fixed positions. Each connecting tube 18 establishes communication between the fuel tank 10 and the conduits 12, 14, or 16.

The conduits 12, 14, and 16 extend slightly above the outer surface of fuel tank 10 and beyond a horizontally-extending flange 20 integrally formed on the periphery of fuel tank 10. The conduits are curved to conform to the contours of fuel tank 10 so as to extend along the latter while keeping roughly uniform spacing therebetween. A device 22 according to the device is attached to the tank flange 20 to hold the conduits 12, 14, and 16 collectively and mount them on the fuel tank 10.

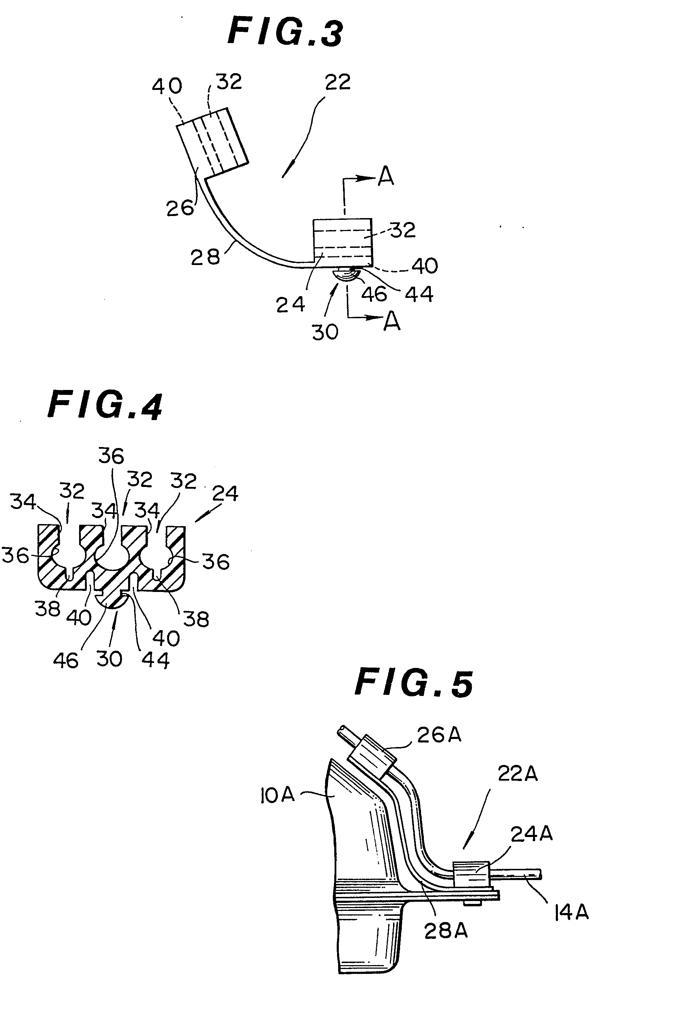

As shown in Figures 3 and 4, the device 22 includes first and second holding members 24 and 26 spaced from each other and connected by means of a connecting member 28. The first holding member 24 is provided with an engaging member 30 to attach the device 22 to the tank flange 20. These members 24, 26, 28, and 30 are integrally formed from resiliently-deformable material, such as synthetic resin.

The first holding member 24 has a profile of regular parallelepiped. The upper surface of the member 24 is provided with grooves 32 for accommodating the conduits 12, 14, and 16. These grooves 32 extend straight between longitudinal opposite ends of the member 24 and also extend perpendicularly downward from the upper surface of the member 24. These grooves 32 are evenly spaced in a parallel manner and each groove 32 is of uniform cross-section with respect to its longitudinal direction. Since the conduits 12, 14, and 16 are inserted into the grooves 32, the number of grooves 32 is there in this embodiment.

In cross-section as shown in Figure 4, each groove 32 is approximately U-shaped with a constricted entrance 34 and a part-circular bottom 36. Thus, the inside diameter of the bottom 36 is somewhat greater than the width of the entrance 34. Since the first holding member 24 is made of resiliently-deformable material, the width of each groove 32 can be forcedly increased. Since each conduct 12, 14, or 16 is to be held in the bottom 36, the original or relaxed inside diameter of the bottom 36 (which is defined as a diameter the bottom 36 has when the member 24 is in its original form and thus no deformation arises in the member 24) is preferably slightly smaller than the original or relaxed outside diameter of the corresponding conducit (which is defined as the diameter of the conduit in its original form) so that the member 24 can firmly hold the conduit. The lowermost portions of the grooves 32, except the central one, are provided with vertical slots 38 extending parallel to the grooves 32. The width of each slot 38 is considerably smaller than the inside diameter of the correspondg bottom 36. Each slot 38 facilitates deformation of the member 24 which causes an increase in the width of the corresponding groove 32. The lower surface of the member 24 is provided with vertical slots 40 extending parallel to, but displaced sligthtly from, the grooves 32. Each slot 40 is opposite to a line on the upper surface of the member 24 between the side and central grooves 32 so as to facilitate deformation of the member 24 which causes increases in the widths of both the foregoing side and central grooves 32.

The lower surface of first holding member 24 is formed, at the center, with a downwardly-extending pin which constitutes the engaging member 30. The pin 30 consists of a constricted base 44 and a hemi-spherical head 46. As shown in Figure 2, the tank flange 20 is provided therethrough with a circular hole 48, the inside diameter of which is smaller original outside diameter of the head 46 of the pin 30 but slightly greater than the original outside diameter of the base 44 of the pin 30. The pin 30 is pressed into the hole 48 from above until the head 46 emerges through the hole 48, in order to attach the first holding member 24 to the tank flange 20. The resiliently-deformable characteristic of the material forming the member 24 ensures that the head 46 can be forcedly passed through the hole 48. The length of the constricted portion 44 of the pin 30 is equal to the thickness of the tank flange 20 so that the head 46 of the pin 30 and the main body of the member 24 cooperate to hold the tank flange 20 firmly to fix the member 24 to the tank flange 20.

As shown in Figures, 2 and 3, the connecting member 28 is in the form of a rectangular plate and extends from the lower edge of one end surface of the first holding member 24 at which the grooves 32 open. The member 28 extends parallel to the grooves 32 near the member 24 and then curves to conform to the contours of the fuel tank 20. In Figures 2 and 3, the member 28 terminates at the leftward edge of the lower surface of the second holding member 26 which has a profile of regular parallelepiped similar to the first holding member 24. In this way, opposite ends of the member 28 join with the ends of the first and second holding members 24 and 26 respectively to connect them. The connecting member 28 holds the member 26 at an inclination depending on the length of the member 28 and the contours of fuel tank 10. As a result, the first and second members 24 and 26 are kept in a fixed spatial relationship conforming to the contours of fuel tank so as to ensure that the conduits 12, 14, and 16 curve along the contours of fuel tank.

The second holding member 26 has grooves 32, slots 38 and 40 similar to those in the first holding member 24. The second member 26 inclines from the first member 24. In Figures 2 and 3, the upper, the lower, leftward, and rightward surfaces of the second member 26 correspond to the leftward, rightward, lower, and upper surfaces of the first member 24. The second member 26 has no engaging member.

During assembly, the conduits 12, 14, and 16 are respectively placed immediately above or adjacent to the corresponding grooves 12 in the first and second holding members 24 and 26, and are then forcedly pressed into them until the conduits reach the bottom 36 beyond the constricted portions 34. Consequently, the first and second members 24 and 26 firmly hold the conduits 12, 14, and 16. The resiliently-deformable characteristic of the material constituting the holding device 22 permits increase of the widths of the grooves 32 and thus the forced insertion of the conduits into the grooves 32. The slots 38 and 40 in the first and second holding members 24 and 26 also ease the insertion of the conduits into the grooves 32, because they facilitate an increase of the widths of the grooves 32. Each constricted entrance 34 prevents the corresponding conduit from disengaging from the conduit 32. The holding device 22 with the conduits 12, 14, and 16 is then attached to the fuel tank 10. Specifically, the pin 30 on the first holding member 24 is forcedly inserted from above into the hole 48 through the tank flange 20 until the pin head 46 emerges through the hole 48. As a result, the holding device 22 with the conduits is firmly engaged with the tank flange 20. In this way, the conduits 12, 14, and 16 can be easily mounted on the fuel tank 10 by means of the mounting device 22. After the attachment of the mounting device 22 on the fuel tank 10, the conduits 12 and 14 are connected to the tubes 18 respectively, while the hose 16 is connected to the tubing unit 17 preliminarily jointed to the tube 18. The resilient characteristic of the material forming the mounting device 22 ensures that the first and second holding members 24 and 26 maintain firm hold on the conduits. The curved structure of the connecting member 28 and the spaced relationship between the first and second holding members 24 and 26 ensure that the conduits 12, 14, and 16 follow the contours of fuel tank 10.

To more reliably maintain the curved structure of the connecting member 28, a rib may be provided around the edges of the connecting member 28.

Figure 5 shows a second embodiment of the present invention which is similar to that of the previous first embodiment except for the following points. A connecting member 28A of a mounting device 22A is made of metal and is attached at one end to the lower surface of a first holding member 24A and at the other end to the corresponding surface of a second holding member 26A of the mounting device 22A by suitable means, such as adhesive, screws, or engaging hardware. Curving the connecting member 28A is easier than curving that of the previous first embodiment, because it is formed of metal. What is more, the connecting member 28A can be easily formed into even more-complicated curves. The first and second holding members 24A and 26A can be made of rubber. Similar to the previous first embodiment, the first holding member 24A is attached to a fuel tank 10A and the mounting device 22A grips conduits, only one 14A of which is shown in Figure 5.

CLAIMS :

1.    A mounting device (22) for a conduit (12, 14 or 16) connected
to a vehicle fuel tank (10), comprising a fixed holding member (24)
having a groove (32), the holding member (24) being resiliently deformable so that the width of the groove (32) can be increased, the
original width of the groove being smaller than that of the conduit
(12, 14, 16), the conduit being forcedly positioned in the groove
(32), whereby the holding member (24) firmly holds the conduit.

2.    A mounting device as claimed in claim 1, characterised in
that the holding member (24) includes a slot (38) at the bottom of
the groove (32) extending parallel to the groove, whereby the slot
(38) facilitates the increase of the width of the groove (32).

3.    A mounting device as claimed in claim 1 or 2, characterised
in that the groove (32) has a constricted entrance (34), the orginal
width of which is smaller than that of the.conduit (12, 14, 16),
the conduit being positioned further within the groove (32) than
the constricted entrance (34).

4.    A mounting device as claimed in any one of claims 1 to 3,
characterised in that the conduit (12, 14, 16) is of circular cross-
section and the groove (32) has a bottom (36) of part-circular cross-
section, the original inside diameter of which is slightly smaller
than the original outside diameter of the conduit (12, 14, 16), the
conduit being positioned in the bottom (36).

5.    A mounting device as claimed in any one of claims 1 to 4,
characterised in that the fuel tank (10) is provided with a flange
(20) having therethrough a hole (48) and wherein the holding member
(24) includes a pin (30) consisting of a constricted base (44) and
an enlarged end (46), the original width of the end of the pin (30) being greater than the inside diameter of the hole (48), the pin
(30) passing through the hole (48) in such a manner as to locate
its end out of the hole (48), whereby the pin (30) attaches the holding
member (24) to the tank flange (20).

6.      A mounting device as claimed in any one of claims 1 to 5,
characterised in that the holding member (24) is formed of synthetic
resin.

7.      A mounting device (22) for a conduit (12, 14, 16) connected
to a vehicle fuel tank (10), comprising:
        a)      spaced first and second holding members (24, 26) each
having a groove (32) and being resiliently deformable so that the
widths of the grooves (32) can be increased, the original widths
of the grooves being smaller than that of the conduit (12, 14, 16),
the conduit being forcedly positioned in the grooves (32), whereby
the holding members (24, 26) firmly hold the conduit, the first holding
member (24) being attached to the fuel tank (10) to mount the conduit
(12, 14, 16) on the fuel tank (10); and
        b)      a connecting member (28) joining the first and second
holding members (24, 26) to connect them in a such a manner as to
hold the first and second holding members in a fixed spatial relationship
conforming to the contours of the fuel tank (10) so that to ensure
that the conduit (12, 14, 16) extends along the contours of the fuel
tank (10).

8.      A mounting device as claimed in claim 7, characterised in
that the holding members (24, 26) and the connecting member (28)
are integrally formed from systentic resin.

9.      A mounting device as claimed in claim 7, characterised in
that the connecting member (28) is made of metal.

10.     A mounting device (22) for conduits (12, 14, 16) connected to a vehicle fuel tank (10), comprising a holding member (24) having at least two parallel grooves (32) in a first surface, the holding member (24) being resiliently deformable so that the widths of the grooves (32) can be increased, the holding member (24) having a slot (38) in a second surface opposite to the first surface, the slot (38) being at a position opposite to a line on the first surface between the grooves (32) so that the slot (38) can facilitate increase of the widths of the grooves (32), the original widths of the grooves being smaller than those of the conduits (12, 14, 16), the conduits being forcedly positioned in the respective grooves (32), whereby the holding member (24) firmly holds the conduits.

# FIG.1

# FIG.2

FIG.3

FIG.4

FIG.5